# EUROPEAN PATENT APPLICATION

(11) **EP 3 855 263 A1**
(43) Date of publication of application: **28.07.2021**
(21) Application number: 20153053.2
(22) Date of filing: 22.01.2020
(51) Int. Cl.: G05B 19/401, B23F 19/00, B23F 19/10

(54) **METHOD AND SYSTEM FOR CHAMFERING GEAR WHEEL**

(71) Applicant: Flexmill Oy, 01900 Nurmijärvi (FI)
(72) Inventor: Tenhunen, Jaakko, 01900 Nurmijärvi (FI)
(74) Representative: Kolster Oy Ab

(57) **Abstract**

There is provided a method and a system for chamfering a gear wheel. The method comprising: obtaining, by a processing unit, one or more target parameters of the gear wheel to be chamfered, obtaining, by the processing unit, measurement data measured from the gear wheel generating, by the processing unit, chamfering parameters of the gear wheel based on the measurement data and the one or more target parameters of the gear wheel and chamfering, by a tooling unit, the gear wheel according to the chamfering parameters of the gear wheel.

## Description

### FIELD OF THE INVENTION

The invention relates to a system and method for chamfering a gear wheel in an automated process.

### BACKGROUND OF THE INVENTION

The automated chamfering of a gear wheel is conventionally performed by a robot. Before the chamfering, the robot must be programmed in order to get desired chamfer for the gear wheel. The programming of the robot is traditionally time-consuming and complicated process, wherein special programming skills are needed. This is a significant drawback particularly with smaller production batches. The time-consuming programming may cause a major part of the total cost of the chamfering of the gear wheel in the automated production. Therefore, the chamfering of the gear wheels is often carried out manually for the smaller production batches although the manufacturing of the gear wheel is otherwise automated.

To alleviate the disadvantages described above, more sophisticated automated chamfering process for the gear wheel is needed.

### BRIEF DESCRIPTION OF THE INVENTION

The invention is defined by the independent claims.

Some embodiments are defined in the dependent claims.

### BRIEF DESCRIPTION OF THE DRAWINGS

Example embodiments of the present invention are described below, by way of example only, with reference to the accompanying drawings, in which
Figure 1 illustrates a general architecture of an automated chamfering unit according to an embodiment;
Figure 2 illustrates a gear wheel;
Figure 3 illustrates a flow diagram of a process according to an embodiment; and
Figure 4 illustrates a block diagram of a system according to an embodiment.

### DETAILED DESCRIPTION OF THE INVENTION

The following embodiments are only examples. Although the specification may refer to "an" embodiment in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may contain also features/structures that have not been specifically mentioned.

As described in Background, programming of the robot in the automated chamfering process may be time-consuming and requires the special programming skills. Therefore, an operator must be trained for programming, or another person capable of programming the robot must be used when doing a setup for the automated chamfering. For example, CAM (Computer Aided Manufacturing) is one example of a method which is widely used for controlling automated machining tools and which requires the special programming skills. The time-consuming programming may increase cost of the automated chamfering process so much that it is not reasonable to use it for smaller production batches. Hence, the chamfering of the smaller production batches is often done manually. The programming of the robot in the automated chamfering process should be so easy and quick that its use would be reasonable also for the smaller production batches. The automated chamfering process is preferred over the manual because it enables higher and more consistent chamfering quality. In addition, a working environment is safer and more comfortable for operators.

The present invention provides a sophisticated solution for easy and quick programming of the robot in the automated chamfering process of the gear wheels.

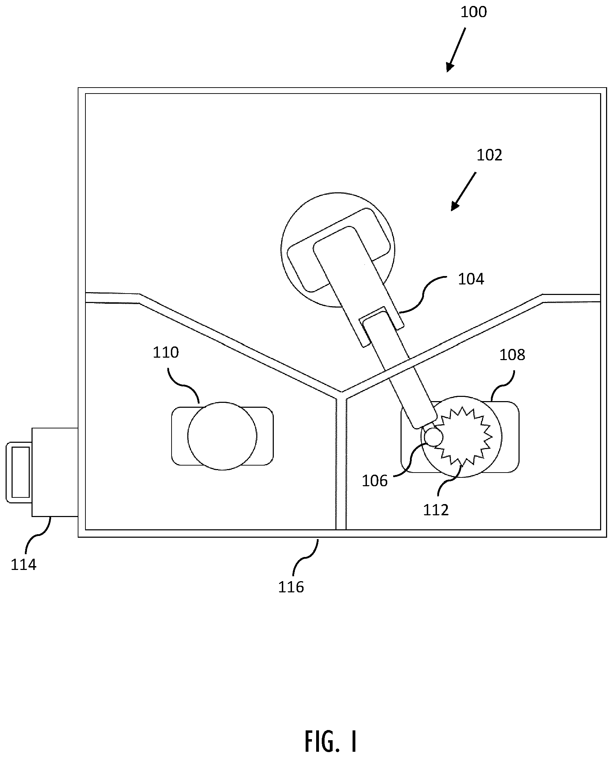

Figure 1 illustrates a top-view of a general simplified architecture of an automated chamfering unit 100 to which embodiments of the invention may be applied. The automated chamfering unit 100 may comprise a tooling unit 102, one or more stations 108, 110 for the gear wheel 112 to be chamfered, a control unit 114 and a housing 116. The tooling unit 102 may comprise the robot 104 and one or more tools 106 for chamfering of the gear wheel 112. The robot 104 may be, for example, an arm robot that holds and moves the one or more tools 106. The station 108, 110 may be a fixture wherein the gear wheel 112 is set and fixed during the chamfering process. There may be several stations 108, 110 for the gear wheels 112 in the one automated chamfering unit 100. For example, two separate stations may be applied so that when the chamfering of a first gear wheel is ongoing in a first station, a second gear wheel, which will be chamfered right after the first one, can be set to a second station at the same time. Hence, the robot may start to chamfer the second gear wheel immediately when the first one is finished and hence, all breaks because of changing the gear wheel may be avoided. The control unit 114 is used for controlling the tooling unit 102, for example, programming of the robot 104 may be done with/via the control unit 114. The housing 116 may be placed around the robot 104 and the stations 108, 110 and it forms a protection against dust and noise caused by the chamfering process. The housing also improve a work safety. The control unit 114 may be placed outside the housing 116 so that controlling of the tooling unit 102 can be done without going inside the housing 116. The control unit 114 may also be far from the automated chamfering unit 100, for example, in another room.

The chamfering of the gear wheel may be a separate working phase, done by the chamfering unit, after manufacturing of the gear wheel. Hence, the manufacturing of the gear wheel may take place in a different location and with a different machining unit than the chamfering of the gear wheel. In another embodiment, the chamfering may be a part of the manufacturing process of the gear wheel and hence, the gear wheel may be chamfered right after manufacturing. The manufacturing and chamfering of the gear wheel may then be carried out in the same automated machining unit which is able to manufacture and also to chamfer the gear wheel. Still the solution according to the invention may be applied for programming the robot to chamfer the gear wheel.

At this point, it is important to highlight that a term "manufactured gear wheel" refers to the gear wheel without the chamfer and a term "manufacturing of the gear wheel" refers to working phases wherein the gear wheel is manufactured but not chamfered. In other words, the gear wheel may be otherwise ready but the chamfer is still missing. It is also possible that the gear wheel is still further processed after the chamfering. For example, quenching and/or grinding may be performed to the gear wheel after the chamfering. A term "chamfered gear wheel" refers to the manufactured gear wheel with the chamfer and a term "chamfering of the gear wheel" refers to working phases wherein the chamfering is done after manufacturing of the gear wheel.

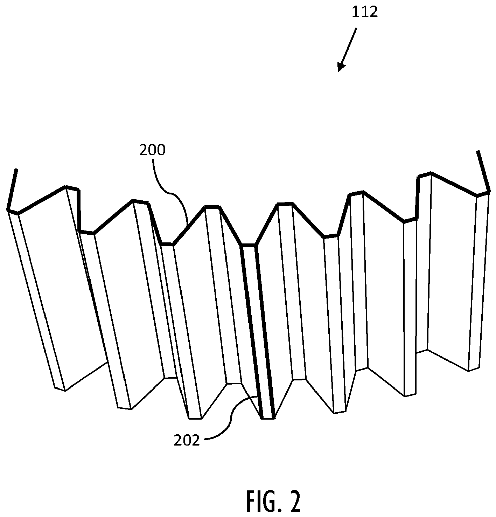

Figure 2 illustrates a section of the gear wheel 112. The gear wheel refers to a part that has a substantially circular shape and having teeth on an outer or an inner perimeter. Nevertheless, the invention is not limited only to the gear wheels, it may also be applied to other teethed parts like, for example, a gear rack and/or a gear shaft. In other words, the invention may be applied to the teethed parts having any shape. A shape of the teeth may also vary in the different teethed parts. The chamfer, according to the invention, may be machined to a side edge of the teeth of the gear wheel 200 (bolded line). The chamfer may be machined on the one side edge or on the both side edges of the teeth of the gear wheel. Referring to Figure 2, the chamfer is illustrated only on the one side edge of the teeth of the gear wheel 200. The chamfer may be a continuous feature which is on the side edges of the teeth 200. The chamfer may cover the entire length of the side edge of the teeth of the gear wheel 200. The chamfer may also be partial, in other words, it may cover just a part of the side edge of the teeth of the gear wheel 200. Still referring to Figure 2, in an embodiment, the chamfer is machined to an edge of the teeth 202 that is parallel to a longitudinal direction of the teeth. In an embodiment, the chamfer may be machined to the side edge of the teeth 200 and to the longitudinal edge of the teeth 202. In other words, the chamfer may be only in the side edge 200 or in the longitudinal edge of the teeth 202 or in both the side edge 200 and the longitudinal edge of the teeth 202.

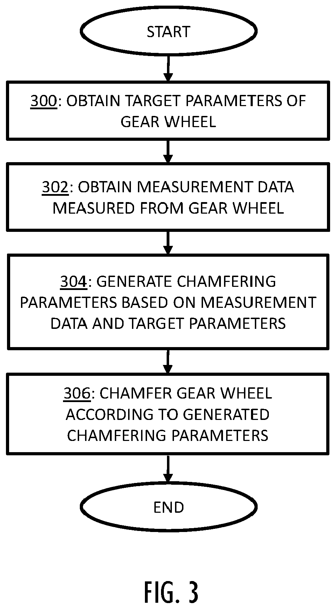

Figure 3 illustrates a flow diagram of a chamfering process according to an embodiment. Referring to Figure 3, the process comprises: obtaining (block 300), by a processing unit, one or more target parameters of the gear wheel to be chamfered; obtaining (block 302), by the processing unit, measurement data measured from the gear wheel; generating (block 304), by the processing unit, chamfering parameters of the gear wheel based on the measurement data and the one or more target parameters of the gear wheel; and chamfering (block 306), by the tooling unit, the gear wheel according to the chamfering parameters of the gear wheel.

In an embodiment, the processing unit may be the controlling unit 114 or be a part of the controlling unit 114.

Referring to block 300, the obtained one or more target parameters comprise data that is needed for machining the chamfer to the gear wheel. In an embodiment, the one or more target parameters are specific attributes defining properties of the chamfer. In other words, the one or more target parameters are used for defining what kind of chamfer is going to be done to the gear wheel. The one or more target parameters may comprise, for example, at least one of a number of tooth, a diameter of the gear wheel, a thickness of the gear wheel, teeth spacing, a tooth thickness, a tooth depth, a shape of the tooth and (root) fillets, a bevel angle of teeth, a helix angle of teeth. In an embodiment, the obtained one or more target parameters may be based on manufacturing data of the gear wheel. The manufacturing data is used for manufacturing of the gear wheel before the chamfering. The manufacturing data of the gear wheel comprise all design parameters required to manufacture the gear wheel with the desired geometry. Hence, the design parameters or a part of the design parameters may also be utilized in the generation the chamfering parameters. The design parameters of the manufacturing data, which may be utilized in the chamfering, may be predetermined, if only a part of the design parameters are used in the generation of the chamfering parameters.

Referring to block 302, the measurement data comprise one or more values which are measured from the gear wheel to be chamfered. In an embodiment, all data needed for chamfering the gear wheel may not be available in the obtained one or more target parameters and hence, the measurement data is also needed for generating the chamfering parameters. The measurement data may comprise, for example, a location and an orientation information of the gear wheel. The location of the gear wheel may be defined in terms of X-, Y- and Z-axis in a coordinate system of the robot. The orientation may define a position and/or alignment of the gear wheel in the station of the chamfering unit. The orientation may refer to a roll or a tilt of the gear wheel such that the measurement data defines the exact locations of the teeth in the coordinate system of the robot. In other words, the location and orientation information may be used to define the exact location and position of the gear wheel to be chamfered in relation to the robot and tool. The location and orientation information may be defined in terms of measurement points that together define locations of various parts of the gear wheel in the coordinate system, e.g. a location of a top face of each tooth of the gear wheel, a location of each bottom of the gear wheel. Further measurement points may be added between each top face and bottom face to acquire dimensions of the teeth. This enables to make the chamfer exactly to the right places of the gear wheel in order to reach the target parameters. The measurements to obtain the measurement data may be performed before or at the beginning of the chamfering process before the generation of the chamfering parameters.

In an embodiment, all data needed for creating the chamfering parameters may be measured from the gear wheel to be chamfered. In other words, the one or more target parameters may not be needed because all data used for generating the chamfering parameters may be received by measuring of the gear wheel. In addition to the location and orientation information, the data measured from the gear wheel may comprise, for example, at least partly the same parameters as the one or more target parameters described earlier.

Referring to block 304, the processing unit generates the chamfering parameters based on the obtained one or more target parameters and the obtained measurement data. As described earlier, the one or more target parameters are the specific attributes defining the properties of the chamfer and the measurement data may define, for example, the exact location and orientation of the gear wheel in the station of the chamfering unit. Hence, the one or more target parameters may define the end product acquired as a result of the chamfering, and the target parameters may define limits to robot when performing the chamfering. The measurement data may indicate starting settings of the robot for the chamfering. Additionally, the design parameters may be used as an input information describing the geometry of the gear wheel. Instead of the design parameters, the geometry of the gear wheel may be measured directly from the gear wheel, e.g. by using a measurement probe.

By using the measurement data, the target parameters and, optionally, the design parameters, the chamfering parameters may be computed. The chamfering parameters define operational instructions for the robot as how to carry out the chamfering to reach the end product from the starting position. The generated chamfering parameters may comprise, for example, a tooling path and trajectories for the robot and the tool, a sequence for removing matter from the gear wheel and moving the robot and/or the gear wheel to the next position for subsequent removal of the matter. Additionally, the chamfering parameters may define one or more of the following parameters for the chamfering: a cutting speed, a rotational speed of the tool, tool(s) used for the chamfering, an order in which different tools are used, an order in which different faces of the teeth are chamfered. For example, the chamfering parameters may define the following sequence:
1. Select a cutter tool and retrieve the cutter tool from a tool rack;
2. Bring the cutter tool to a first face of a first tooth of the gear wheel, e.g. to a first measurement point of the measurement data;
3. Cut the first face (e.g. a top face) to a limit defined by the chamfering parameters;
4. Bring the cutter tool to a second face (e.g. one of the two side faces) of the first tooth of the gear wheel e.g. to a second measurement point of the measurement data;
5. Cut the second face (e.g. a top face) to a limit defined by the chamfering parameters;
   X. Replace the cutter tool with a file tool;
   X+1. Bring the file tool to the first face of the first tooth of the gear wheel;
   X+2. File the first face to a limit defined by the chamfering parameters;
   X+3. Bring the cutter tool to a second face (e.g. one of the two side faces) of the first tooth of the gear wheel;

In this manner, the trajectories of the robot may be defined such that the robot is capable of tooling the gear wheel to have the desired target parameters. Furthermore, the chamfering parameters may define different trajectories for the different tools. For example, the chamfering parameters may define that a top face of a tooth shall be cut to a first limit by using the cutting tool and, thereafter, the top face shall be filed to a second limit by using the file tool. The second limit is different from the first limit and may define a lower and, optionally wider top face of the tooth.

Referring to block 306, the generated chamfering parameters are used for tooling the chamfer to the gear wheel by the tooling unit. As described, the tooling unit may comprise, for example, the arm robot and the tool for machining the chamfer to the gear wheel. The tool is coupled to the robot arm which moves according to the tooling path defined by the chamfering parameters, changes the tool as defined by the chamfering parameters, removes matter from a face of a tooth of a gear wheel to a certain limit defined by the chamfering parameters, etc. Hence, the tool moves with the robot arm and makes the actual chamfering of the gear wheel. The tool may be interchangeable and may then be detachably coupled with the robot arm.

In an embodiment, the tool may be stationary and the gear wheel is moved by the robot arm in relation to the tool. Even though the tool may be stationary, it may still, for example, rotate to perform the tooling. Then the gear wheel is coupled with the robot arm which moves according to the tooling path defined by the chamfering parameters, etc. Still the tool may interchangeable and may be changed for example, by the robot arm and/or manually.

The method described above in blocks 300 - 306 provide a simple and automated way to program the robot of the automated chamfering unit. The robot can be programmed without any specific programming skills, which is a great benefit. Because of the automated programming of the robot, the setup time of the automated chamfering unit is short which enables to use the automated chamfering process also for the smaller production batches.

In an embodiment, the processing unit determines measurement parameters to be measured from the gear wheel to obtain the measurement data used for generating the chamfering parameters. The determined measurement parameters may be based at least partly on the obtained one or more target parameters and/or design parameters of the gear wheel, e.g. the geometry of the gear wheel before and/or after the chamfering. The processing unit may determine what parameters may be needed for generating the chamfering parameters in addition to the already obtained one or more target parameters.

In an embodiment, the measurement parameters to be measured from the gear wheel comprise the location and the orientation of the gear wheel in the station of the chamfering unit. As described, the one or more target parameters based at least partly on manufacturing data. The manufacturing data of the gear wheel comprise the design parameters which define the geometry of the gear wheel. Hence, the one or more target parameters may be used for determining where to measure the location and the orientation from the gear wheel, e.g. defining the above-described measurement points. Based on the one or more design parameters, the processing unit knows the geometry of the gear wheel and may then be able to determine from where and how to measure the position and the orientation from the gear wheel. The processing unit may further determine, based on the one or more target parameters, the measurement parameters to be measured from the gear wheel to obtain the measurement data which is utilized in the generation of the chamfering parameters of the gear wheel. For example, the processing unit may determine the number and locations of the measurement points on the basis of both the design parameters and the target parameters. If the design parameters are available and define the geometry of the gear wheel, less measurement points may be needed than in a case where the geometry of the gear wheel is not available.

In an embodiment, the gear wheel is measured, under the control of the processing unit, according to the determined measurement parameters in the automated chamfering process. The measurement according to the measurement parameters may be carried out in the automated chamfering unit before the processing unit obtain the measurement data. The automated chamfering unit may have a capability to measure the gear wheel according to the measurement parameters determined by the processing unit. The measurement may be performed as a 3D-measurement, for example, by using a measuring probe. In an embodiment a scanner may also be used for measuring. The probe is used for sensing discrete measurement points from the gear wheel, for example, along three axes X, Y and Z and based on the points, the exact dimensions of the gear wheel may be acquired. The scanner may be, for example, a sensor which can, without contact to the gear wheel, measure the dimensions of the gear wheel by scanning. Based on the dimensions, for example, the position or the orientation of the gear wheel may be identified by using an image processing algorithm, for example. The measurement may be an automated phase in the automated chamfering process. In some case, the measuring may also performed manually. In an embodiment, the measuring may also be used for verifying the one or more target parameters.

In an embodiment, the tooling unit is used for measuring the determined measuring parameters. As described earlier, the tooling unit may comprise the arm robot and the tool may be coupled with the arm robot. The tool may be detachably coupled with the robot which make possible to change the tool used in the robot arm. The tool may comprise the measurement probe or other measuring device e.g. scanner for measuring the determined measurement parameters. The tooling unit may change the chamfering tool to the measurement device when the measurement is needed and when the gear wheel is measured and the measurement data got, the tooling unit may change the measurement device back to the chamfering tool used for chamfering the gear wheel.

In another embodiment, the gear wheel is coupled with the arm robot and the tool is stationary. Anyway, the tool may be interchangeable by the tooling unit and hence the tool may be changed to the measuring device, like the probe or the scanner, and the gear wheel may be measured as described above.

In an embodiment, a plurality of tools is used for chamfering the gear wheel in the automated chamfering process. As described, the tool used in the robot may be detachable which enables to use the different kind of tools in the chamfering. There may be, for example, a tool magazine in the tooling unit wherein the tools are stored. The robot has an access to the tool magazine and hence, it is able to take and return the tool from/to the tool magazine. The tool may also be changed during the chamfering process if several tools are used for machining the chamfer to the gear wheel. For example, some features of the chamfer may be done by a first tool and some other by a second tool, and the tool may be automatically changed during the actual chamfering. For example, a cutter and/or a rotary file may be used as a tool in the chamfering process. The measurement probe or sensor can be seen as a tool as well. The robot arm may first pick up the measurement probe from the tool magazine and measure the gear wheel according to the measurement parameters. When the measurement is done, the robot arm may return the measurement probe into the tool magazine, and take the first chamfering tool from the tooling magazine, and if needed, change also the chamfering tool during the actual chamfering of the gear wheel.

In an embodiment, the processing unit is able to adjust the chamfering parameters according to the tool used for chamfering the gear wheel. As described, the different tools like, for example, the cutter and file may be used in the chamfering of the gear wheel. Dimensions of the different tools may vary and this should be taken into account in the chamfering parameters. The processing unit may adjust the chamfering parameters automatically according to the different tools used in the chamfering process. This may be done already in the generation of the chamfering parameters if more than one tool is used for chamfering the gear wheel. It may also be possible that the adjustment of the chamfering parameters are done when the robot takes the tool from the tooling magazine. The processing unit may recognize the tool when it is taken from the tooling magazine and is able to do the adjustments for the chamfering parameters before the tool is used for chamfering.

In an embodiment, the processing unit is configured to analyse the geometry of the gear wheel and/or the measurement data and to detect if a size of the gear wheel is out of the operating range of the tooling unit and, if such a detection is made, generates a notice to an operator. If the size of the gear wheel is too large for the tooling unit, the gear wheel cannot properly be chamfered and hence, it is important to sense beforehand whether the chamfering is possible in the chamfering unit. The processing unit may detect already at the stage where the target parameters are obtained whether the size or the geometry of the gear wheel is inside the operating range of the tooling unit, because the target parameters define the desired geometry of the chamfered gear wheel. In some embodiment, the detection may be done based on the measurement data obtained by the processing unit and hence, the size of the gear wheel may be acquired from the actual measurement. In some other embodiment, the size of the gear wheel may be detected when the chamfering parameters are generated, in other words, when the one or more target parameters and the measurement data are combined. It is also possible that the station wherein the gear wheel is placed and fixed in the chamfering process is provided with the one or more sensors which may generate a signal to the processing unit if the size of gear wheel is out of the operating range of the tooling unit.

When the detection has been made, the processing unit may generate a notice that the tooling unit is not able to perform the chamfering. At the same time, the processing unit may also cancel or set on hold the chamfering process for further investigations. The processing unit may also provide a notification which is outputted, for example, in a user interface to the operator of the automated chamfering unit. The notification may comprise information about the issue and that the chamfering process cannot proceed. It is also possible that the processing unit provides corrective actions to correct the issue, for example, in the case wherein the issue may be corrected by changing the positioning of the gear wheel in the station. In an embodiment, the notification may be provided with an alarm signal and/or alarm light that the operator will note the issue.

In an embodiment, the one or more target parameters are received as a manual input. As described, the one or more target parameters are the structural attributes of the gear wheel and are often defined by dimensions and other technical information, for example, in technical drawings used in the manufacturing of the gear wheel. Hence, the one or more target parameters may be based on the dimensions and other technical information defined in the technical drawings. The technical drawing may be in an electronic format or it may be a print. In an embodiment, the technical drawing may comprise a table wherein the one or more target parameters needed in the automated chamfering are defined. In another embodiment, the one or more target parameters may be provided in the table without the technical drawing. The operator gets the one or more target parameters, for example, from the technical drawing or table and feeds the parameters manually into the system via the user interface. Hence, the processing unit obtain the one or more target parameters needed in the programming of the robot as the manual input.

In an embodiment, the processing unit generates the one or more target parameters from coded input data. The coded input data may comprise same information like the manually inputted data described above. There is no need to input the one or more target parameters manually one by one when applying the coded input data. The coded data may be, for example, a file which is uploaded via the user interface into the system. The processing unit is able to generate the one or more target parameters from the uploaded file.

In an embodiment, the coded input data comprise a barcode. By reading the bar code, the data included in the barcode is inputted into the system. The processing unit is able to generate the one or more target parameters from the inputted barcode. The automated chamfering unit may comprise, for example, a reader which is used for reading the barcode. The reader may be placed, for example, in the controlling unit. The barcode may be, for example, in the technical drawing where it may be read by the reader. In some case, the barcode may also be placed on the gear wheel. In an embodiment, the coded input data may comprise a QR-code wherein the one or more target parameters are coded. The QR-code may be used as the barcode described above.

In an embodiment, the coded input data comprise a computer aided design file, a CAD-file. The CAD-file is normally created in a design phase of the gear wheel and it may comprise the all structural attributes of the gear wheel. The CAD-file may be a 3D- and/or 2D-file made by a CAD software. The format of the CAD-file may be, for example, some universal format which may be utilized in the automated chamfering process. The one or more target parameters may then be generated from the CAD-file by the processing unit. The chamfer of the gear wheel may also be modelled in the CAD-file. The CAD-file may be uploaded into the system via the user interface and the processing unit may be able to generate the one or more target parameters from the file.

In an embodiment, the chamfering parameters of the gear wheel are saved in a database. The chamfering parameters may be saved when generated. In addition, the one or more target parameters, the measurement parameters and the measurement data may be saved in the chamfering process. The database may be, for example, in a controlling unit. In some case, the coded input data used for generating the one or more target parameters may also be saved. In an embodiment, the database may be, for example, a cloud service where the several chamfering units may have an access.

In an embodiment, the saved chamfering parameters are reused for chamfering, if the processing unit detects, that the gear wheel to be chamfered has the same structural attributes as a gear wheel chamfered earlier. For example, if a batch of the gear wheels is chamfered, the generation of the chamfering parameters may be done only for the first gear wheel of the batch and all other are chamfered according to the chamfering parameters generated for the first gear wheel. It may also be possible that some verification measurement, like measuring the location and orientation, is done for the each gear wheel of the batch during the chamfering process, nevertheless the chamfering is done based on the same chamfering parameters. It may be understood that the geometry of the gear wheels from the same manufacturing patch is substantially the same and, accordingly, the exact geometry needs not to be measured. Only measuring the position and the orientation of the gear wheel is thus needed. If the position and/or the orientation differs from the orientation and/or position used when generating the chamfering parameters, the gear wheel may be moved to the correct position and the chamfering parameters used as such or, alternatively, the chamfering parameters may be altered to match the differing position and/or orientation. The altering may comprise simple translation and/or rotation in the coordinate system.

In an embodiment, the saved chamfering parameters are reused for the gear wheels which are not necessarily from the same manufacturing batch. The one or more target parameters define the structural attributes of the gear wheel, in other words, the geometry of the gear wheel, hence the similarity of the gear wheels may easily be detected when obtaining the one or more target parameters. The processing unit may detect the similarity between a new gear wheel to be chamfered and an old gear wheel already chamfered and which chamfering parameters are saved in the database. Then the processing unit may propose to use already generated and saved chamfering parameters in the chamfering of the new gear wheel instead of creating the new chamfering parameters. Although the saved chamfering parameters may be utilized for the new gear wheel, the measuring of the new gear wheel according to the measurement parameters may still be performed. In another embodiment, new chamfering parameters may be computed from a scratch according to the principles described above.

In an embodiment, the processing unit may be able to modify the saved chamfering parameters. For example, if there is a minor deviation between the new and old gear wheels, the processing unit may modify the chamfering parameters such that the saved chamfering parameters of the older gear wheel is possible to use also for the new gear wheel. The processing unit may propose the modifications to the operator via the user interface and if the operator accept the modification, the processing unit may modify the chamfering parameters. The modified chamfering parameters may be saved and the old chamfering parameters used for creating the new ones may remain without modifications in the database.

In an embodiment, the automated chamfering process may comprise a finishing phase after chamfering of the gear wheel. The finishing phase may comprise, for example, deburring and/or cleaning of the chamfered gear wheel. The finishing of the gear wheel may be performed by the tooling unit with the one or more different tool. The deburring (brushing) is used to remove possible burrs from the chamfered gear wheel and cleaning is used to clean the gear wheel from chips and cutting/cooling fluid.

In some case, the gear wheel may be measured after chamfering to ensure that the chamfered gear wheel fulfils the needed requirements. When chamfering a batch of the gear wheels having the same chamfering parameters, every gear wheel or only some of the gear wheels of the batch may be measured. The finishing and measuring of the gear wheel after the chamfering may be defined, for example, in the chamfering parameters of the gear wheel.

In an embodiment, the processing unit obtains the one or more target parameters for chamfering. The one or more target parameters define the desired structural attributes of the gear wheel and may be acquired from the manufacturing data of the gear wheel. The manufacturing of the gear wheel is performed before the automated chamfering process and, hence, the manufacturing data is available for the chamfering process. The one or more target parameters may be inputted manually or it may be uploaded as the coded data. The manual input means that the operator inputs the one or more parameters into the system via the user interface. The one or more target parameters may be obtained, for example, from the manufacturing/technical drawing of the gear wheel and inputted one by one into the system. The coded input data may be, for example, the barcode or QR-code comprising the one or more target parameters. The barcode or QR-code may be read by the reader. The processing unit is able to generate the one or more target parameters from the data included in the barcode or QR-code read by the reader.

The processing unit, after obtaining the one or more target parameters, may determine the measurement parameters based at least partly on the obtained one or more target parameters. The measurement parameters are used for measuring of the gear wheel to obtain the measurement data. The measurement parameters may comprise, for example, the location and orientation of the gear wheel in the station of the chamfering unit. The tooling unit may measure the gear wheel to be chamfered according to the determined measurement parameters and the processing unit may obtain the measurement data based on the measurement.

The processing unit generates the chamfering parameters based on the one or more target parameters and the measurement data. The chamfering parameters may comprise all needed data for chamfering the gear wheel according to the requirements. The generated chamfering parameters may be saved in the database. The tooling unit performs the chamfering according to the generated chamfering parameters. The chamfering process may also comprise the finishing of the chamfered gear wheel which is done after the chamfer. The finishing may comprise, for example, the deburring and/or cleaning of the gear wheel.

The automated chamfering process according to the invention is very effective because of the simple programming of the robot of the tooling unit. The program is generated from the one or more target parameters, which are obtained at least partly from the manufacturing data of the gear wheel and the measurement data measured from the gear wheel before generating the chamfering parameters. The operator just feed the one or more target parameters into the system and based on the one or more parameters, the system is capable to measure the gear wheel and generate the chamfering parameters. Hence, the programming of the robot, in other words, to obtain the chamfering parameters can be carried out quickly and without any specific programming skills. The quick programming make possible to use the automated chamfering process also for the small and medium size manufacturing batches because the setup time of the process is short and hence the total cost of the chamfering process is low compared to the traditional automated chamfering processes. The automated chamfering process enables the higher quality level and it also improves the work safety compared to the manual chamfering which still often is used for the small manufacturing batches.

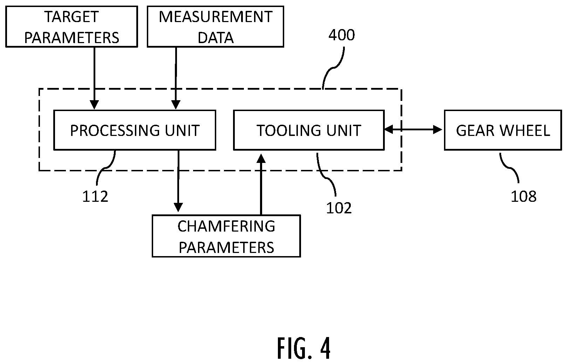

Figure 4 illustrates a system 400 for controlling of the automated chamfering process of the gear wheel according to an embodiment. Referring to Figure 4, the system 400 comprises: a processing unit 112, configured to perform any of the steps of blocks 300, 302 and/or 304; and a tooling unit 102, configured to perform any of the steps of block 306.

The system 400 may further comprise the user interface for receiving the one or more target parameters or any other data needed in the chamfering process. In an embodiment, the user interface may be in the controlling unit wherein the operator may input the data into the system. The user interface may also be used for changing the information between the operator and the chamfering process. For example, possible alarm signal may be presented in the user interface.

In one example, each of the processing unit 112 and the tooling unit 102 may be implemented by using a specific circuitry, such as a processing unit circuitry and tooling unit circuitry. In some example, there can be a specific circuitry that performs functions and/or steps of each of the processing unit 112 and/or the tooling unit 102. For example, a specific circuitry may comprise at least one processor and at least one memory including a computer program code, wherein the at least one memory and the computer program code are configured, with the at least one processor, to cause the system to carry out the procedures of Figure 3. On the other hand, said specific circuitry may be an ASIC or FPGA as described later.

As used in this application, the term 'circuitry' refers to all of the following: (a) hardware-only circuit implementations such as implementations in only analog and/or digital circuitry; (b) combinations of circuits and software and/or firmware, such as (as applicable): (i) a combination of processor(s) or processor cores; or (ii) portions of processor(s)/software including digital signal processor(s), software, and at least one memory that work together to cause an apparatus to perform specific functions; and (c) circuits, such as a microprocessor(s) or a portion of a microprocessor(s), that require software or firmware for operation, even if the software or firmware is not physically present.

This definition of 'circuitry' applies to all uses of this term in this application. As a further example, as used in this application, the term "circuitry" would also cover an implementation of merely a processor (or multiple processors) or portion of a processor, e.g. one core of a multi-core processor, and its (or their) accompanying software and/or firmware. The term "circuitry" would also cover, for example and if applicable to the particular element, an application-specific integrated circuit (ASIC), and/or a field-programmable grid array (FPGA) circuit for the apparatus according to an embodiment of the invention.

The computer program may be distributed using a distribution medium which may be any medium readable by the controller. The medium may be a program storage medium, a memory, a software distribution package, or a compressed software package. In some cases, the distribution may be performed using at least one of the following: a near field communication signal, a short distance signal, and a telecommunications signal.

It will be obvious to a person skilled in the art that, as technology advances, the inventive concept can be implemented in various ways. The invention and its embodiments are not limited to the example embodiments described above but may vary within the scope of the claims.

## Claims

1. A method for chamfering a gear wheel, the method comprising:
obtaining, by a processing unit, one or more target parameters of the gear wheel to be chamfered;
obtaining, by the processing unit, measurement data measured from the gear wheel;
generating, by the processing unit, chamfering parameters of the gear wheel based on the measurement data and the one or more target parameters of the gear wheel; and
chamfering, by a tooling unit, the gear wheel according to the chamfering parameters of the gear wheel.

2. The method of claim 1, wherein the processing unit determines measurement parameters to be measured from the gear wheel based at least partly on the one or more target parameters of the gear wheel and wherein the gear wheel is measured, under the control of the processing unit, according to the determined measurement parameters to obtain the measurement data.

3. The method of claim 2, wherein the gear wheel is measured by the tooling unit.

4. The method of any preceding claim, wherein the chamfering parameters define trajectories of the tooling unit for said chamfering.

5. The method of any preceding claim, wherein the chamfering parameters define one or more tools for said chamfering.

6. The method of claim 5, wherein the chamfering parameters define different trajectories of the tooling unit for different tools.

7. The method of any preceding claim, wherein the processing unit detects that a size of the gear wheel is out of an operating range of the tooling unit and generates a notice on the basis of the detection.

8. The method of any preceding claim, wherein the one or more target parameters are received as a manual input.

9. The method of any preceding claim, wherein the processing unit generates the one or more target parameters from coded input data.

10. The method of claim 9, wherein coded input data comprise a barcode.

11. The method of claim 9, wherein coded input data comprise a computer aided design, CAD, file.

12. The method of any preceding claim, wherein the chamfering parameters of the gear wheel are saved in a database.

13. The method of claim 12, wherein the saved chamfering parameters are reused for chamfering, if the processing unit detects, that the gear wheel to be chamfered has the same target parameters as a gear wheel chamfered earlier.

14. A system for chamfering a gear wheel, the system comprising:
a processing unit; and
a tooling unit;
wherein the system is configured to perform all the steps of anyone of claims 1 - 13.

15. A computer readable medium comprising program instructions that, when read by the computer, cause execution of the method according to anyone of claims 1 - 12.
